(19) Europäisches Patentamt / European Patent Office / Office européen des brevets

(11) **EP 3 853 683 B1**

(12) **FASCICULE DE BREVET EUROPEEN**

(45) Date de publication et mention de la délivrance du brevet:
**27.12.2023 Bulletin 2023/52**

(21) Numéro de dépôt: **19818238.8**

(22) Date de dépôt: **08.11.2019**

(51) Classification Internationale des Brevets (IPC):
**B60T 8/172** *(2006.01)*    **G05D 1/02** *(2020.01)*
**B60W 40/00** *(2006.01)*    **B60W 30/00** *(2006.01)*

(52) Classification Coopérative des Brevets (CPC):
**B60W 40/105; B60T 8/172; B60W 30/18172; B60W 40/10;** B60T 2250/04; B60W 2520/28

(86) Numéro de dépôt international:
**PCT/FR2019/052674**

(87) Numéro de publication internationale:
**WO 2020/099768 (22.05.2020 Gazette 2020/21)**

(54) **MODULE ET PROCEDE DE COMMANDE D'AUTOMOBILE, COMPRENANT UNE EVALUATION DE VITESSE DES ROUES ARRIERE PAR LES ROUES AVANT SEULEMENT**

KRAFTFAHRZEUGSTEUERUNGSMODUL UND -VERFAHREN MIT EINER AUSWERTUNG DER HINTERRADGESCHWINDIGKEIT AUF GRUNDLAGE VON AUSSCHLIESSLICH DEN VORDERRÄDERN

MOTOR VEHICLE CONTROL MODULE AND METHOD, COMPRISING AN EVALUATION OF REAR WHEEL SPEED BASED ON THE FRONT WHEELS ONLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2018  FR 1860439**

(43) Date de publication de la demande:
**28.07.2021  Bulletin 2021/30**

(73) Titulaire: **Hitachi Astemo France**
**93700 Drancy (FR)**

(72) Inventeurs:
• **WITTE, Lennart**
  **67000 STRASBOURG (FR)**
• **PATRÃO CARQUEIJÒ, Alex**
  **93500 PANTIN (FR)**

(74) Mandataire: **Brevalex**
**Tour Trinity**
**1 B Place de la Défense**
**92400 Courbevoie (FR)**

(56) Documents cités:
WO-A1-2015/114280    FR-A1- 2 327 119
FR-A1- 2 386 433     US-A- 5 387 031

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention se rapporte à un module ainsi qu'à un procédé de commande d'automobile, dans lesquels la vitesse des roues arrière est évaluée par les vitesses de roues avant seulement.

Dans certaines circonstances, comme le blocage ou le patinage, la vitesse de déplacement sur le sol d'une roue et notamment d'une roue arrière ne peut pas être déterminée par une mesure directe de sa vitesse de rotation. Il arrive aussi que la mesure fasse défaut après un dommage du dispositif dédié. C'est pourquoi il est envisagé avec cette invention de procéder à une évaluation indirecte d'une vitesse de déplacement sur le sol d'une roue arrière de l'automobile en marche, en recourant à des évaluations des vitesses des roues directrices, typiquement les roues avant.

L'évaluation de vitesse des roues arrière ainsi obtenue pourra servir à diverses applications. Une d'entre elles pourra être une aide à une décision de freinage, ou au contraire d'antiblocage, des roues arrière.

L'évaluation de vitesse dont il est question concerne une vitesse de déplacement de la roue arrière sur la route. La vitesse réelle de la roue sera différente en cas de blocage ou de patinage. Une application (non limitative) envisagée ici consiste donc en une comparaison de l'évaluation proposée ici avec une mesure ou une autre évaluation de la vitesse de la roue arrière, obtenue autrement et pouvant notamment comprendre une mesure de la vitesse de rotation de la roue arrière. L'évaluation faite d'après l'invention pourra cependant servir seulement à évaluer la vitesse de la roue arrière, sans tenir compte d'un blocage ou d'un patinage, si une mesure directe est devenue impossible, par panne de capteur ou autrement.

Un avantage de l'invention est que l'évaluation de vitesse de la roue arrière au sol peut être de bonne précision, même pour une roue placée à l'intérieur d'un virage serré, grâce à la prise en compte des conditions de braquage des roues avant.

L'invention peut concerner une seule des roues arrière, ou les deux, à un même instant. Les roues arrière peuvent être ou non motrices ou directrices.

L'art antérieur connexe comprend FR 2386433 A1, mais qui décrit un procédé où une vitesse de référence d'un véhicule est estimée en choisissant soit une mesure de vitesse de roue avant, soit une mesure de vitesse de roue arrière. Il n'y a donc aucune évaluation, indirecte, de la vitesse des roues arrière par celle des roues avant, puisque la vitesse de référence estimée est une vitesse d'ensemble du véhicule.

Sous une forme générale, l'invention concerne un module d'évaluation d'une vitesse de déplacement sur route d'une roue arrière d'une automobile, renseigné par des paramètres d'entrée qui comprennent, comme seuls paramètres de vitesse, des évaluations de vitesses de roues avant de l'automobile, caractérisé en ce que la vitesse de la roue arrière est évaluée par une formule

$$V_{eAR} = \left( \frac{V_{moy}}{3} + \frac{2}{3} \frac{V_{min}^2}{V_{max}} \right) K_{corr}$$

, où $V_{eAR}$ est l'évaluation de vitesse de la roue arrière, $V_{min}$ et $V_{max}$ les évaluations de vitesse des roues avant avec $V_{min} \leq V_{max}$, $V_{moy} = \frac{1}{2}(V_{min} + V_{max})$, et $K_{corr}$ est un coefficient de correction, et en ce que $K_{corr} = 1$ pour $\frac{V_{max}}{V_{min}} \leq S_1$, et $K_{corr} \leq 1$ pour $\frac{V_{max}}{V_{min}} > S_1$, $S_1$ étant un seuil fixe.

Et si $K_{corr}$ est décroissant quand $\frac{V_{max}}{V_{min}}$ croît au-dessus de $S_1$, l'évaluation pourra rester fidèle pour tous les rayons de braquage ou presque, même les plus petits.

De façon encore préférée, $K_{corr}$ est constant quand $S_2$ atteint un second seuil fixe avec $S_2 > S_1$; et plus précisément on peut préconiser $S_1 = 1,15$, $S_2 = 1,4$, $K_{corr}$ linéaire entre $S_1$ et $S_2$ et $K_{corr} = 0,6$ à $S_2$.

L'invention peut être dédiée à un procédé de commande d'automobile, caractérisé en ce qu'il comprend un module selon ce qui précède, appliqué à une décision de freinage des roues arrière.

Un mode possible de réalisation consiste alors en ce qu'une évaluation de la vitesse des roues arrière, faite par ledit module, est utilisée pour donner une vitesse de référence des roues arrière au-dessous de laquelle un frein des roues arrière est empêché.

Pour cela, on peut envisager que la vitesse de référence corresponde à l'évaluation de vitesse des roues arrière multipliée par un coefficient constant, inférieur à 1.

Certains aspects, caractéristiques et avantages de l'invention seront maintenant décrits en détail au moyen des figures suivantes, annexés à titre purement illustratif, qui permettent une description détaillée d'une réalisation de celle-ci :

- la figure 1 est une vue schématique d'une automobile en train de virer ;
- la figure 2 est un diagramme de vitesses de roues ;
- la figure 3 illustre l'environnement du module de commande, et
- la figure 4 représente une fonction de coefficient de correction.

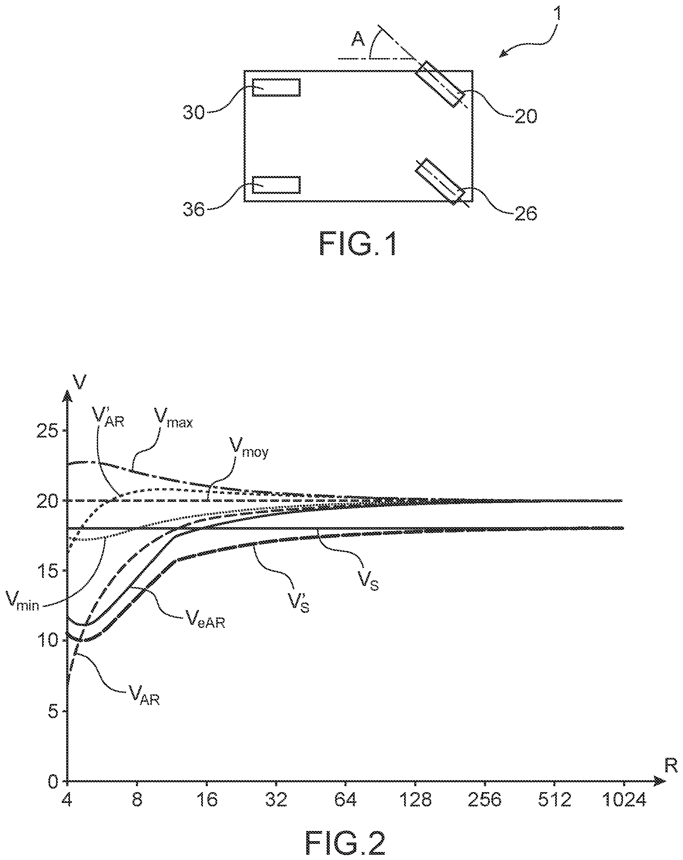

La figure 1 représente partiellement une automobile, et notamment son châssis 1 monté sur des roues avant gauche et droite 2G et 2D et des roues arrière gauche et droite 3G et 3D. Les roues avant 2D et 2G motrices sont représentées faisant un angle de braquage A induisant un virage de rayon R. Dans l'exemple non limitatif de la figure 1, les roues arrière 3D et 3G ne sont ni motrices ni directrices, mais sont munies de freins, qui ne sont pas représentés sur cette figure, et peuvent servir au stationnement, mais aussi contribuer au freinage.

La figure 2 illustre certaines courbes de vitesses V des roues en fonction du rayon de virage R de l'automobile. Les vitesses V sont en unités arbitraires. Ces vitesses sont des vitesses de déplacement au sol ; les vitesses linéaires des roues, proportionnelles à leurs vitesses de rotation, peuvent être différentes en cas de blocage, patinage, ou d'autres défauts de roulement. On supposera une vitesse moyenne de l'automobile $V_{moy}$ identique quel que soit le rayon de virage considéré. La vitesse de déplacement de la roue avant extérieure, ici 2D, est alors donnée par la courbe $V_{max}$, et la vitesse de la roue avant intérieure, ici 2G, par la couche $V_{min}$. On représente aussi la courbe de vitesse $V_{AR}$ de la roue arrière intérieure, ici 3G, et $V'_{AR}$ la courbe de la roue arrière extérieure, ici 3D.

Un premier but de l'invention est de pouvoir évaluer la vitesse des roues arrière 3G et 3D, et notamment la vitesse ($V_{AR}$) de la roue à l'intérieur d'un virage, au moyen des seules informations de vitesses de déplacement des roues avant $V_{max}$ et $V_{min}$. On utilise un module 4 logique incorporé aux circuits de la commande du véhicule et qui dispose de deux entrées alimentées par les vitesses $V_{max}$ et $V_{min}$, qui peuvent être fournies par des capteurs de rotation 5 et 6 des axes de ces roues 2D et 2G, ou tout autre moyen. Le module 4 effectue alors le calcul

$$V_{eAR} = \left(\frac{V_{moy}}{3} + \frac{2}{3}\frac{V_{min}^2}{V_{max}}\right) K_{corr}$$

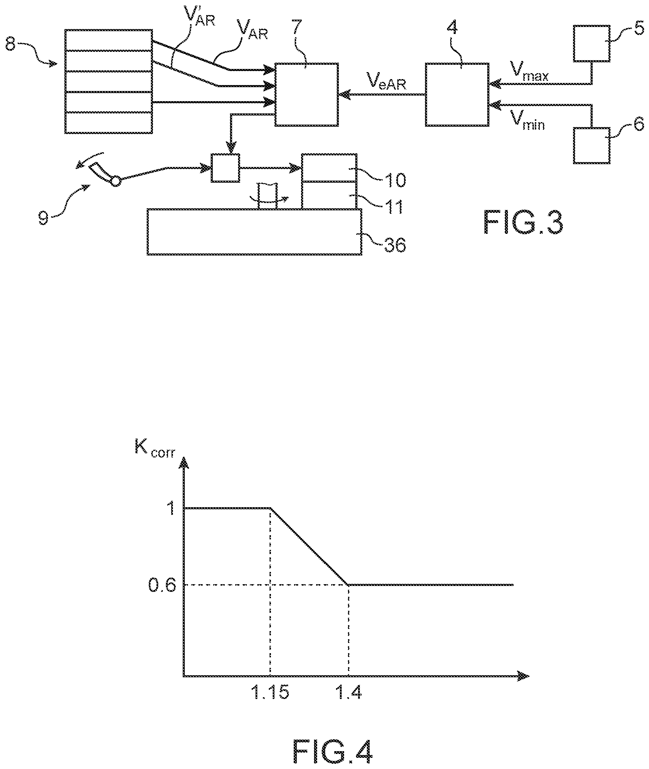

, où $V_{eAR}$ est l'évaluation de la vitesse de la roue arrière à l'intérieur du virage, $V_{min}$ et $V_{max}$ sont toujours les évaluations ou mesures de vitesses des roues avant et $V_{moy}$ est leur moyenne. Kcorr est un coefficient de correction dont la valeur est avantageusement celle de la fonction représentée à la figure 4, égale à 1 pour $\frac{V_{max}}{V_{min}} < 1,15$, à 0,6 pour $\frac{V_{max}}{V_{min}} > 1,4$, et linéaire entre ces deux valeurs.

La courbe $V_{eAR}$ ainsi obtenue est aussi représentée à la figure 2 ; on voit qu'elle est très proche de la valeur $V_{AR}$, à l'exception des braquages extrêmes des roues avant 2D et 2G.

L'invention rend donc possible l'évaluation de la vitesse $V_{AR}$ avec une très bonne précision par les seules vitesses des roues avant 2D et 2G. Le module 4 peut comprendre d'autres entrées pour recevoir des paramètres supplémentaires, mais il n'est pas prévu d'informations relatives à des mesures directes sur les roues arrière 3D et 3G.

Le résultat $V_{eAR}$ à la sortie du module 4 peut être utilisé pour diverses applications. Un procédé particulièrement intéressant est néanmoins la décision de commande de freinage ou au contraire d'antiblocage des roues arrière 3D et 3G, selon les situations. On revient à la figure 2 pour une explication.

Quand une mesure de vitesse directe et fiable des roues arrière 3D et 3G n'est pas disponible, il est habituel de définir une vitesse de seuil $V_s$ égale par exemple, à 0,8 $V_{moy}$. On considère en effet que les vitesses $V_{AR}$ et $V'_{AR}$ des roues arrière 3D et 3G ne doivent pas s'éloigner trop de la vitesse $V_{moy}$ et notamment descendre trop au-dessous d'elle, ce qui signifierait le blocage de ces roues arrière. Mais en réalité $V_{AR}$ est au-dessous de la vitesse de seuil $V_s$ dans les virages serrés, ce qui fait que les modules de décision traditionnels diagnostiquent à tort un blocage de la roue intérieure, ici 3G, et ordonnent son antiblocage si le freinage du véhicule est demandé.

Conformément à une application de l'invention, l'évaluation VeAR de la vitesse de la roue arrière intérieure obtenue par le module 4 est utilisée pour définir un nouveau seuil de décision V's, déduit de VeAR par le même coefficient de correction constant que précédemment. On obtient donc un nouveau seuil de décision V's qui s'écarte de plus en plus nettement de $V_s$ pour les virages plus serrés, et qui reste au-dessous de la vitesse $V_{AR}$ normale de la roue intérieure 3G, sauf éventuellement pour les braquages les plus serrés. L'antiblocage sera donc imposé seulement si une diminution de la vitesse des roues arrière au-dessous de ces nouvelles valeurs de seuil V's, et nettement au-dessous des vitesses $V_{AR}$ et $V'_{AR}$ normales est détectée.

Le dispositif de commande peut comprendre, en aval du module 4, un module de décision 7 qui reçoit l'évaluation $V_{eAR}$, calcule V's et compare sa valeur aux vitesses $V_{AR}$ et $V'_{AR}$ fournies par d'autres modules fournisseurs de paramètres 8 du dispositif de commande. D'après le résultat de la comparaison, la commande d'une pédale de freinage 9 est appliquée (le freinage est permis si $V_{eAR} \geq V'_s$) ou non (l'antiblocage est imposé si $V_{eAR} < V'_s$) à l'actionneur 10 d'un frein 11, qui peut être un frein à tambour, utilisé en aussi pour le stationnement équipant la roue arrière 3G. Un dispositif semblable existe aussi pour l'autre roue arrière 3D.

L'évaluation de vitesse faite ici concernait plus précisément la roue arrière intérieure (ici 3G) du virage. Une évaluation de la roue arrière extérieure (3D) pourrait être faite avec un module analogue et une faction de génération de $V_{eAR}$ différente, mais c'est la roue intérieure qui soulève le plus de difficultés en conduite.

## NOMENCLATURE

| 1 | Châssis |
|---|---|
| 2G | Roue avant gauche |
| 2D | Roue avant droite |
| 3G | Roue arrière gauche |
| 3D | Roue arrière droite |
| 4 | Module |
| 5 | Capteur de rotation |
| 6 | Capteur de rotation |

7 Module de décision
8 Modules fournisseurs de paramètres
9 Pédale de freinage
10 Actionneur
11 Frein
A Angle de braquage
R Rayon de virage
V Vitesse

## Revendications

1. Module d'évaluation d'une vitesse de déplacement sur route d'une roue arrière (3G, 3D) d'une automobile dans un virage, renseigné par des paramètres d'entrée qui comprennent, comme seuls paramètres de vitesse, des évaluations de vitesses de roues avant (2G, 2D) de l'automobile, **caractérisé en ce que** la vitesse de la roue arrière à l'intérieur du virage est évaluée par une formule

$$V_{eAR} = \left(\frac{V_{moy}}{3} + \frac{2}{3}\frac{V_{min}^2}{V_{max}}\right)K_{corr}$$

, où $V_{eAR}$ est l'évaluation de vitesse de la roue arrière, $V_{min}$ et $V_{max}$ les évaluations de vitesse des roues avant avec $V_{min}$ ≤ $V_{max}$, $V_{moy} = \frac{1}{2}(V_{min} + V_{max})$, et $K_{corr}$ est un coefficient de correction, et **en ce que** $K_{corr}$ = 1 pour $\frac{V_{max}}{V_{min}} \leq S_1$, et $K_{corr} \leq 1$ pour $\frac{V_{max}}{V_{min}} > S_1$, $S_1$ étant un seuil fixe.

2. Module d'évaluation selon la revendication 1, **caractérisé en ce que** $K_{corr}$ est décroissant quand $\frac{V_{max}}{V_{min}}$ croît au-dessus de $S_1$.

3. Module d'évaluation selon la revendication 2, **caractérisé en ce que** $K_{corr}$ est constant quand $\frac{V_{max}}{V_{min}} \geq S_2$, $S_2$ étant un second seuil fixe avec $S_2 > S_1$.

4. Module d'évaluation selon la revendication 3, **caractérisé en ce que** $S_1$ = 1,15, $S_2$ = 1,4, $K_{corr}$ est linéaire entre $S_1$ et $S_2$ et $K_{corr}$ = 0,6 à $S_2$.

5. Module d'évaluation selon l'une quelconque des revendications précédentes, dans lequel le module d'évaluation est configuré pour évaluer une vitesse de roue arrière non directrice (3G, 3D) à partir des vitesses de roues avant directrices (2G, 2D) de l'automobile.

6. Module d'évaluation selon l'une quelconque des revendications précédentes, dans lequel le module d'évaluation est configuré pour évaluer une vitesse de roue arrière non motrice (3G, 3D) à partir des vitesses de roues avant motrices (2G, 2D) de l'automobile.

7. Dispositif de commande de freinage d'une automobile, **caractérisé en ce qu'**il comprend le module d'évaluation selon l'une quelconque des revendications précédentes.

8. Procédé de commande d'une automobile comprenant le dispositif selon la revendication 7, **caractérisé en ce qu'**il consiste, en comparant des évaluations de la vitesse de ladite roue arrière faites par ledit module, à appliquer une commande de freinage ou non, en imposant alors un antiblocage de ladite roue arrière.

9. Procédé de commande d'une automobile selon la revendication 8, **caractérisé en ce que** l'antiblocage est décidé si lesdites évaluations sont inférieures à une vitesse de référence de l'automobile, multipliée par un coefficient constant inférieur à 1.

10. Procédé de commande d'une automobile selon la revendication 9, **caractérisé en ce que** la vitesse de référence est une moyenne des évaluations de vitesses des roues avant.

## Patentansprüche

1. Auswertungsmodul für eine Fahrgeschwindigkeit eines Hinterrads (3G, 3D) eines Fahrzeugs auf der Straße in einer Kurve, das mit Eingangsparametern gespeist wird, die als einzige Geschwindigkeitsparameter Auswertungen von Geschwindigkeiten der Vorderräder (2G, 2D) des Fahrzeugs umfassen, **dadurch gekennzeichnet, dass** die Geschwindigkeit des Hinterrads im Inneren der Kurve durch eine Formel $$V_{eAR} = \left(\frac{V_{moy}}{3} + \frac{2}{3}\frac{V_{min}^2}{V_{max}}\right)K_{corr}$$ ausgewertet wird, wobei $V_{eAR}$ die Auswertung der Geschwindigkeit des Hinterrads ist, $V_{min}$ und $V_{max}$ die Geschwindigkeitsauswertungen der Vorderräder sind, wobei $V_{min}$ ≤ $V_{max}$, $V_{moy} = \frac{1}{2}(V_{min} + V_{max})$ und $K_{corr}$ ein Korrekturkoeffizient ist, und dadurch, dass $K_{corr}$ = 1 für $V_{moy} = \frac{1}{2}(V_{min} + V_{max})$ steht und $K_{corr}$ für $\frac{V_{max}}{V_{min}} \leq S_1$ steht und $K_{corr} \leq 1$ für

$$\frac{V_{max}}{V_{min}} > S_1$$ steht, wobei $S_1$ ein fester Schwellenwert ist.

2. Auswertungsmodul nach Anspruch 1, **dadurch gekennzeichnet, dass** $K_{corr}$ abnimmt, wenn $\frac{Vmax}{Vmin}$ über $S_1$ steigt.

3. Auswertungsmodul nach Anspruch 2, **dadurch gekennzeichnet, dass** $K_{corr}$ konstant ist, wenn $\frac{Vmax}{Vmin} \geq S_2$ konstant ist, wobei $S_2$ ein zweiter fester Schwellenwert ist, wobei $S_2 > S_1$.

4. Auswertungsmodul nach Anspruch 3, **dadurch gekennzeichnet, dass** $S_1$ = 1,15, $S_2$ = 1,4, $K_{corr}$ linear zwischen $S_1$ und $S_2$ ist und $K_{corr}$ = 0,6 bis $S_2$.

5. Auswertungsmodul nach einem der vorhergehenden Ansprüche, wobei das Auswertungsmodul dazu konfiguriert ist, eine Geschwindigkeit des nicht lenkenden Hinterrads (3G, 3D) anhand der Geschwindigkeiten der lenkenden Vorderrädern (2G, 2D) des Fahrzeugs auszuwerten.

6. Auswertungsmodul nach einem der vorhergehenden Ansprüche, wobei das Auswertungsmodul dazu konfiguriert ist, eine Geschwindigkeit des nicht angetriebenen Hinterrads (3G, 3D) anhand der Geschwindigkeiten der angetriebenen Vorderräder (2G, 2D) des Fahrzeugs auszuwerten.

7. Bremssteuerungsvorrichtung eines Fahrzeugs, **dadurch gekennzeichnet, dass** sie das Auswertungsmodul nach einem der vorhergehenden Ansprüche umfasst.

8. Steuerungsverfahren für ein Fahrzeug, das die Vorrichtung nach Anspruch 7 umfasst, **dadurch gekennzeichnet, dass** es darin besteht, durch Vergleichen der durch das Modul erzeugten Auswertungen der Geschwindigkeit des Hinterrads einen Bremsbefehl zu erteilen oder nicht, wodurch dem Hinterrad eine Blockierbremsung auferlegt wird.

9. Steuerungsverfahren für ein Fahrzeug nach Anspruch 8, **dadurch gekennzeichnet, dass** die Blockierbremsung festgelegt wird, wenn die Auswertungen niedriger sind als eine Referenzgeschwindigkeit des Fahrzeugs, multipliziert mit einem konstanten Koeffizienten von weniger als 1.

10. Steuerungsverfahren für ein Fahrzeug nach Anspruch 9, **dadurch gekennzeichnet, dass** die Referenzgeschwindigkeit ein Mittelwert der Auswertungen der Geschwindigkeiten der Vorderräder ist.

**Claims**

1. A module for evaluating a speed of a rear wheel (3G, 3D) of an automobile in a turn, filled in by input parameters which comprise, as the only speed parameters, evaluations of speeds of the front wheels (2G, 2D) of the automobile, **characterized in that** the speed of the rear wheel in the inside of the turn is evaluated by a formula $$V_{eAR} = \left(\frac{V_{moy}}{3} + \frac{2}{3}\frac{V_{min}^2}{V_{max}}\right) K_{corr}$$, where $V_{eAR}$ is the rear wheel speed evaluation, $V_{min}$ and $V_{max}$ the front wheel speed evaluations with $V_{min} \leq V_{max}$, $V_{moy} = \frac{1}{2}(V_{min} + V_{max})$, and $K_{corr}$ is a correction coefficient, and **in that** $K_{corr}$ = 1 for $\frac{V_{max}}{V_{min}} \leq S_1$, and $K_{corr} \leq 1$ for $\frac{V_{max}}{V_{min}} > S_1$, S1 being a fixed threshold.

2. The evaluation module according to claim 1, **characterised in that** $K_{corr}$ is decreasing when $\frac{V_{max}}{V_{min}}$ increases above

3. The evaluation module according to claim 2, **characterised in that** $K_{corr}$ is constant when $\frac{V_{max}}{V_{min}} \geq S_2$, $S_2$ being a second fixed threshold with Sz >

4. The evaluation module according to claim 3, **characterised in that** $S_1$ = 1.15, S2 = 1.4, $K_{corr}$ is linear between $S_1$ and $S_2$ and $K_{corr}$ = 0.6 at $S_2$.

5. The evaluation module according to any one of the preceding claims, wherein the evaluation module is configured to evaluate the speed of a non-steering rear wheel (3G, 3D) from the speeds of the steering front wheels (2G, 2D) of the automobile.

6. The evaluation module according to any one of the preceding claims, wherein the evaluation module is configured to evaluate the speed of a non-driven rear wheel (3G, 3D) from the speeds of the driven front wheels (2G, 2D) of the automobile.

7. A device for controlling braking of an automobile, **characterised in that** it comprises the evaluation module according to any one of the preceding claims.

8. A method for controlling an automobile comprising the device according to claim 7, **characterised in that** it consists, by comparing evaluations of the speed of said rear wheel made by said module, in applying a braking command or not, thereby imposing anti-lock braking of said rear wheel.

9. The method for controlling an automobile according to claim 6, **characterised in that** antilock braking is decided if said evaluations are lower than a reference speed of the automobile, multiplied by a constant coefficient of less than 1.

10. The method for controlling an automobile according to claim 9, **characterised in that** the reference speed is an average of the front wheel speed evaluations.

FIG.1

FIG.2

FIG.3

FIG.4

**EP 3 853 683 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2386433 A1